# EUROPEAN PATENT SPECIFICATION

(11) **EP 1 544 055 B1**
(45) Date of publication and mention of the grant of the patent: **03.11.2010**
(21) Application number: 04029059.5
(22) Date of filing: 08.12.2004
(51) Int. Cl.: B60R 21/16

(54) **Curtain airbag device**
Vorhang-Airbageinrichtung
Dispositif de coussin gonflable de type rideau

(30) Priority: 19.12.2003 JP 2003423067
(43) Date of publication of application: 22.06.2005
(73) Proprietor: TAKATA CORPORATION, Minato-ku, Tokyo 106-8510 (JP)
(72) Inventor: Kumagai, Masayoshi, Minato-ku Tokyo 106-8510 (JP); Noguchi, Atsushi, Minato-ku Tokyo 106-8510 (JP)
(74) Representative: Banzer, Hans-Jörg

(56) References cited:
- US-A1- 2002 036 394
- US-A1- 2003 132 624
- US-B1- 6 237 938
- US-B1- 6 412 810

## Description

The present invention relates to curtain airbag devices provided with curtain airbags which are capable of being deployed along inner side surfaces of vehicle cabins.

### [Background Art]

In a vehicle provided with a curtain airbag device, when the vehicle is involved in, for example, a side-on collision or rollover, curtain airbags are deployed downward along an inner side surface (for example, a door and a pillar) of the vehicle cabin so as to protect the head of the vehicle occupant and to keep the vehicle occupant inside the vehicle cabin.

US Patent No. 6,237,938 and US 2002/0036394 discloses a guide member provided on a C pillar for guiding downward along the pillar a rear portion of a curtain airbag inflatable along the inner side surface of the vehicle cabin.

Moreover, the guide member in the US Patent includes a member called a track having a box-shaped cross-section and a slider called an element and arranged in the track movably in the longitudinal direction of the track. The rear end portion of the curtain airbag is tied to the element. For preventing the rear edge portion of the curtain airbag moved downward from being returned upward, latches are arranged at a regular interval along the substantially entire length of the track.

The top and bottom ends of the track are provided with mounting flanges, and each of the flanges is fixed to the C pillar with a bolt or a screw.

### [Problems to be Solved by the Invention]

Accordingly, the object of the present invention is to provide a curtain airbag device in which a curtain airbag is capable of being deployed very smoothly along a guide member.

### [Means for Solving the Problems]

According to the present invention, this object is achieved by a curtain airbag device as defined in claim 1. The dependent claims define preferred and advantageous embodiments of the invention.

A curtain airbag device according to the present invention includes a curtain airbag which is capable of being deployed downward along an inner side surface of a vehicle cabin, and a guide member attached to a pillar of a vehicle and extending vertically for guiding the curtain airbag for the downward deployment. The curtain airbag includes a vertical chamber which is inflatable along the guide member from an upper portion to a lower portion of the curtain airbag, the vertical chamber being disposed substantially directly above a base end of a link strap. A vertical line connecting middle points in the width direction of the vertical chamber is substantially parallel to the guide member.

According to the curtain airbag device of the present invention, since the vertical chamber and the guide member are substantially parallel to each other, the vertical chamber can be inflated quickly along the guide member when the curtain airbag is deployed. Thus, the curtain airbag can be deployed very quickly while being guided by the guide member.

In the present invention, it is preferable that the curtain airbag further includes the link strap protruding from the lower end portion of the vertical chamber of the curtain airbag and is guided by the guide member. According to such a structure, when the vertical chamber is inflated substantially vertically downward, the link strap can smoothly move downward as it is pulled by the lower end portion of the vertical chamber.

Furthermore, in the present invention, it is preferable that the guide member extends within a range of ±20° angle with respect to the vertical line of the vehicle cabin.

### [Advantages]

According to the curtain airbag device of the present invention, when the curtain airbag is to be deployed, the curtain airbag is guided by the guide member and the vertical chamber disposed near the guide member of the curtain airbag is inflated downward quickly so as to allow quick deployment of the curtain airbag.

### [Brief Description of the Drawings]

Fig. 1 shows a curtain airbag device according to an embodiment of the present invention, in which one of curtain airbags extends along a corresponding roof side of a vehicle and a guide rod is disposed along a C pillar.
Fig. 2 is an enlarged view of a rear portion of the curtain airbag.
Fig. 3 includes a side view and a cross-sectional view of the curtain airbag.

### [Best Mode for Carrying Out the Invention]

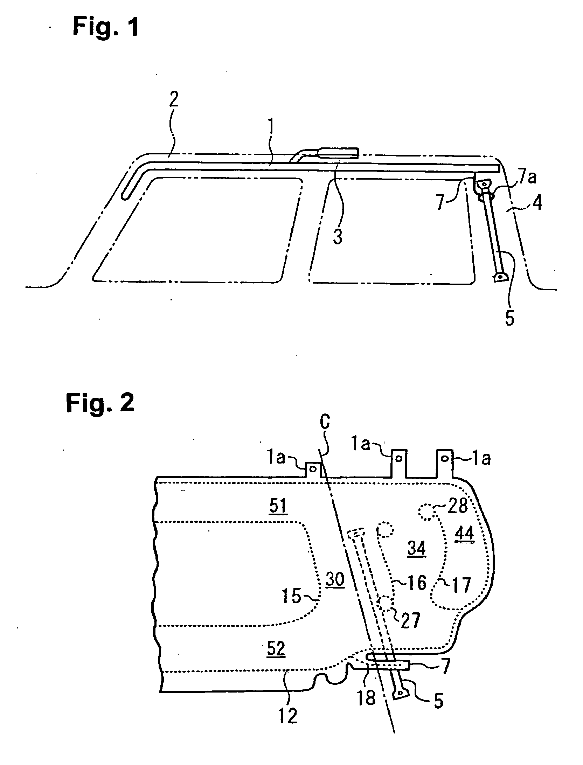

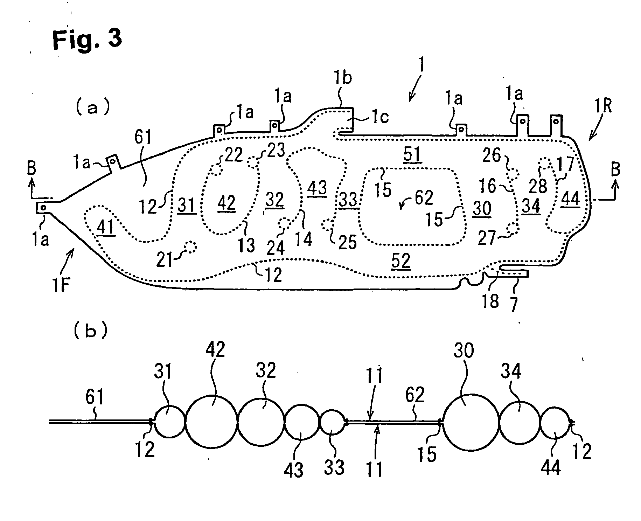

An embodiment will now be described with reference to the drawings. Fig. 1 shows a curtain airbag device according to an embodiment of the present invention. The diagram illustrates one of curtain airbags extending along a corresponding roof side of a vehicle, and a guide rod disposed along a C pillar. Fig. 2 is an enlarged view of a rear portion of the curtain airbag. Fig. 3(a) is a side view illustrating a state where the curtain airbag is inflated. Fig. 3(b) is a cross-sectional view taken along line B-B in Fig. 3(a).

According to the embodiment, a pair of curtain airbag 1 is disposed along a roof side 2 of a vehicle (the border section between the ceiling and inner side surface of a vehicle cabin) while being folded in a slender manner in the longitudinal direction of the vehicle. When a vehicle is involved in a side-on collision or a rollover, for example, the curtain airbag 1 is inflated by gas being sent from an inflator 3 and is deployed in the downward direction of the vehicle body along the side surface, i.e. doors and pillars, in the vehicle cabin. An upper edge of the curtain airbag 1 is provided with tabs 1a (see Fig. 3(a)) which are fastened to the corresponding roof side 2.

Referring to Fig. 3, the central portion of the upper edge of the curtain airbag 1 with respect to the longitudinal direction is provided with a projection 1b which extends upward. The projection 1b is provided with a gas-entrance hole 1c. A tip of the inflator 3 is inserted through the gas-entrance hole 1c and is tied thereto with a band (which is not shown in the drawings).

A C pillar 4 in the vehicle has a guide rod 5 attached thereto, which functions as a guide member for guiding the rear portion of the curtain airbag 1 along the C pillar 4 when the curtain airbag 1 is deployed along the C pillar 4 in the downward direction of the vehicle body. The guide rod 5 has a rod-like structure which extends along the C pillar 4 in the vertical direction of the vehicle body. Both the upper and lower ends of the guide rod 5 are fixed to the C pillar 4 with, for example, bolts.

A link strap 7 protrudes from the vicinity of the bottom corner area in the rear portion of the curtain airbag 1. An extremity of the link strap 7 is provided with a loop 7a which is loosely tied around the guide rod 5. The loop 7a is movable vertically along the guide rod 5. Alternatively, the extremity of the link strap 7 may be provided with a ring. In that case, the ring is set around the guide rod 5.

Furthermore, a pillar garnish (which is not shown in the drawings) covers the cabin-side of the C pillar 4. The door-frame portion of the C pillar 4 has a weather strip (which is not shown in the drawings) attached thereto. A lateral edge of the pillar garnish is in contact with the weather strip.

Although not shown in the drawings, the roof side 2 is provided with a roof-side garnish which covers the curtain airbag 1. The roof-side garnish abuts against the pillar garnish.

The curtain airbag 1 is formed by overlapping two sheets 11 and 11 having substantially the same shape, such that one of the sheets faces an inner side surface of the vehicle cabin and the other faces the interior of the vehicle cabin. The two sheets 11 and 11 are connected to each other by linear connected portions 12 to 17 and circular connected portions 21 to 28 so as to form a first vertical chamber 30, vertical chambers 31 to 34, bag chambers 41 to 44, horizontal chambers 51 and 52, and non-inflatable portions 61 and 62.

The linear connected portions 12 to 18 and the circular connected portions 21 to 28 hermetically join the sheets 11 and 11 together. For the connection between the two sheets 11 and 11, high-strength connecting means (such as stitching with high-strength threads, bonding with an adhesive having high adhesivity, or welding) is used so that the two sheets 11 and 11 are prevented from being separated from each other even when the pressure inside the curtain airbag 1 reaches the upper limit pressure value.

The linear connected portion 12 extends substantially around the curtain airbag 1, but at a front portion 1F of the curtain airbag 1, the linear connected portion 12 extends downward from the upper edge of the front portion 1F so as to form a substantially U-shape. This forms the non-inflatable portion 61 along the upper edge of the front portion 1F and the bag chamber 41 at the frontmost part of the front portion 1F.

The linear connected portion 12 extends along an edge of the projection 1b of the curtain airbag 1, but is cut off at the rear edge of the projection 1b so as to form the gas-entrance hole 1c of the curtain airbag 1.

The linear connected portion 13 is disposed slightly towards the front of the curtain airbag 1 with respect to the center of the curtain airbag 1. The linear connected portion 13 is U-shaped, and its inner region forms the bag chamber 42. The upper portion of the bag chamber 42 communicates with the gas-entrance hole 1c, whereas the lower portion has no openings.

The linear connected portion 13 and the peripheral linear connected portion 12 at the front portion 1F of the curtain airbag 1 have the vertical chamber 31 disposed therebetween. The upper portion of the vertical chamber 31 communicates with the gas-entrance hole 1c, and the lower portion communicates with the bag chamber 41 and with the lower portion of the vertical chamber 32, which will be described below. To prevent the lower portion of the vertical chamber 31 from being over-inflated, the circular connected portion 21 is provided.

The linear connected portion 14 has a reversed U-shape and is disposed at the central portion of the curtain airbag 1 with respect to the longitudinal direction. The inner region of the linear connected portion 14 forms the bag chamber 43. The lower portion of the bag chamber 43 communicates with the lower portions of the vertical chambers 32 and 33, whereas the upper portion of the bag chamber 43 has no openings.

The linear connected portion 14 and the linear connected portion 13 have the vertical chamber 32 disposed therebetween. The upper portion of the vertical chamber 32 communicates with the gas-entrance hole 1c.

The linear connected portion 15 is disposed slightly towards the back of the curtain airbag 1 with respect to the center of the curtain airbag 1. The linear connected portion 15 is substantially square-shaped. The upper edge and the lower edge of the linear connected portion 15 are respectively not in contact with the upper edge and the lower edge of the linear connected portion 12. Thus, the horizontal chamber 51 is formed between the upper edge of the linear connected portion 12 and the upper edge of the linear connected portion 15, and the horizontal chamber 52 is formed between the lower edge of the linear connected portion 12 and the lower edge of the linear connected portion 15.

The linear connected portion 15 and the linear connected portion 14 have the vertical chamber 33 disposed therebetween. The upper portion of the vertical chamber 33 communicates with the front portion of the horizontal chamber 51 and with the gas-entrance hole 1c. The lower portion of the vertical chamber 33 communicates with the lower portion of the bag chamber 43 and the front portion of the horizontal chamber 52.

The inner region of the linear connected portion 15 is cut off from the gas-entrance hole 1c so as to form the non-inflatable portion 62.

At the rear portion of the curtain airbag 1, the linear connected portion 16 extending vertically is disposed. Moreover, further towards the back of the curtain airbag 1, the linear connected portion 17 having a substantially L-shape is disposed.

The linear connected portions 15 and 16 have the first vertical chamber 30 disposed therebetween. The upper and lower portions of the first vertical chamber 30 respectively communicate with the horizontal chambers 51 and 52.

The linear connected portions 16 and 17 have the vertical chamber 34 disposed therebetween. The upper and lower portions of the vertical chamber 34 respectively communicate with the upper and lower portions of the first vertical chamber 30. Alternatively, the vertical chamber 34 may be bag-shaped such that only the lower portion communicates with the lower portion of the first vertical chamber 30.

The bag chamber 44 is formed between the linear connected portion 17 and a part of the linear connected portion 12 extending along a rear portion 1R of the curtain airbag 1. The upper portion of the bag chamber 44 communicates with the upper portion of the vertical chamber 34, whereas the lower portion of the bag chamber 44 has no openings. Alternatively, the lower portion of the bag chamber 44 may communicate with the lower portion of the vertical chamber 34.

Opposite ends of each of the linear connected portions 13, 14, 16, and 17 are provided with the corresponding circular connected portions 22 to 28 for reinforcement. The lower end of the linear connected portion 17 is connected with the linear connected portion 12.

The link strap 7 is positioned below the first vertical chamber 30. The link strap 7 is formed by extending the sheets 11 and 11 in an elongated shape and joining them together by the linear connected portion 18.

Referring to Figs. 2 and 3, according to the embodiment, the rear edge of the linear connected portion 15 extends substantially vertically. The first vertical chamber 30 is formed between the rear edge of the linear connected portion 15 and the linear connected portion 16 extending vertically. The first vertical chamber 30 extends from the upper edge to the lower edge of the curtain airbag 1. A line (center line) C, which is formed by connecting the middle points in the longitudinal width direction of the curtain airbag, is substantially parallel to the guide rod 5. In detail, if the guide rod 5 is traced over the curtain airbag 1, the line C and the guide rod 5 are positioned within an angle of ±5° with respect to each other.

In this embodiment, the longitudinal line of the guide rod 5 and the line C are both leaned so that the upper portions are more leaned towards the front of the vehicle body than the lower portions. Alternatively, the upper portions may be leaned so that the upper portions are more leaned towards the back of the vehicle body. The angle of incline in both cases is preferably within a range of ±20° with respect to the vertical line of the vehicle body.

The vertical chambers 31 to 34 similarly extend from the upper edge to the lower edge of the curtain airbag 1.

When a vehicle provided with such a curtain airbag device is involved in a side-on collision or a rollover, the inflator 3 generates gas so as to inflate the curtain airbag 1. The curtain airbag 1 pushes open the roof-side garnish, and is deployed downward along the vehicle interior side of the pillar garnish.

The rear portion of the deploying curtain airbag 1 is guided by the guide rod 5 via the link strap 7. The link strap 7 starts moving downward along the guide rod 5 when the curtain airbag 1 begins to be deployed. In this case, as the curtain airbag 1 is being deployed, the link strap 7 moves downward while ripping through the pillar garnish and the weather strip.

Furthermore, the link strap 7 moves downward along the guide rod 5 with the curtain airbag 1 until the curtain airbag 1 reaches the bottommost point of deployment. Since the link strap 7 connects the curtain airbag 1 and the guide rod 5 together, the curtain airbag 1 can be deployed along the corresponding side surface of the vehicle cabin.

According to the above embodiment, the center line C of the first vertical chamber 30 and the guide rod 5 is substantially parallel with each other, and the direction of deployment of the first vertical chamber 30 is aligned with the direction in which the guide rod 5 extends. The first vertical chamber 30 can thus be inflated quickly downward. Accordingly, the curtain airbag 1 is capable of being deployed quickly along the guide rod 5. In particular, since the center line C of the first vertical chamber 30 and the guide rod 5 are leaned towards the front of the vehicle body, a strong tension is generated in the horizontal direction along the lower edge of the curtain airbag 1 when the curtain airbag 1 is deployed. This induces a state where the lower edge of the curtain airbag 1 is pulled sideways with a strong force. Accordingly, such a curtain airbag 1 provides a high restraining force for keeping vehicle occupants inside a vehicle. In other words, the curtain airbag 1 advantageously prevents vehicle occupants from being thrown outside a vehicle.

The technical scope of the present invention is not limited to the above embodiment, and modifications are permissible within the scope of the present invention. For example, the number and positions of the vertical chambers and the bag chambers are not limited to those in the drawings. The guide rod may alternatively be provided along a D pillar.

## Claims

1. A curtain airbag device comprising:
a curtain airbag (1) which is capable of being deployed downward along an inner side surface of a vehicle cabin; and
a guide member (5) attached to a pillar (4) of a vehicle and extending vertically for guiding the curtain airbag (1) for the downward deployment, **characterised in that**
the curtain airbag (1) includes a vertical chamber (30) which is inflatable along the guide member (5) from an upper portion to a lower portion of the curtain airbag (1), the vertical chamber (30) being disposed substantially directly above a base end of a link strap (7), and
wherein a vertical line (C) connecting middle points in the width direction of the vertical chamber (30) is substantially parallel to the guide member (5).

2. The curtain airbag device according to Claim 1, wherein the link strap (7) protruding from the lower portion of the vertical chamber (30) of the curtain airbag (1) is guided by the guide member (5).

3. The curtain airbag device according to Claim 1 or 2, wherein the guide member (5) extends within a range of ±20° angle with respect to the vertical line of the vehicle cabin.

## Patentansprüche

1. Vorhangairbag-Vorrichtung, umfassend:
einen Vorhangairbag (1) welcher entlang einer inneren Seitenfläche einer Fahrzeugkabine nach unten entfaltbar ist; und
ein Führungsteil (5), welches an einer Säule (4) eines Fahrzeugs angebracht ist und sich vertikal erstreckt, um den Vorhangairbag (1) bei seiner nach unten gerichteten Entfaltung zu führen,
**dadurch gekennzeichnet,**
**dass** der Vorhangairbag (1) eine vertikale Kammer (30) umfasst, welche entlang des Führungsteils (5) von einem oberen Abschnitt zu einem unteren Abschnitt des Vorhangairbags (1) aufblasbar ist, wobei die vertikale Kammer (30) im Wesentlichen direkt oberhalb eines Basisendes eines Verbindungsgurtes (7) angeordnet ist, und
**dass** eine vertikale Linie (C), welche Mittelpunkte in der Breitenrichtung der vertikalen Kammer (30) verbindet, im Wesentlichen parallel zu dem Führungsteil (5) liegt.

2. Vorhangairbag-Vorrichtung nach Anspruch 1,
**dadurch gekennzeichnet,**
**dass** der Verbindungsgurt (7), welcher von dem unteren Abschnitt der vertikalen Kammer (30) des Vorhangairbags (1) hervorragt, durch das Führungsteil (5) geführt ist.

3. Vorhangairbag-Vorrichtung nach Anspruch 1 oder 2,
**dadurch gekennzeichnet,**
**dass** sich das Führungsteil (5) in einem Winkelbereich von ±20° bezüglich der vertikalen Linie der Fahrzeugkabine erstreckt.

## Revendications

1. Un dispositif de coussin de protection consistant en un rideau gonflable, comprenant :
- un rideau gonflable (1) capable d'être déployé vers le bas le long d'une surface latérale intérieure de la zone des passagers d'un véhicule ; et
- un organe de guidage (5) fixé à un montant (4) d'un véhicule et s'étendant verticalement pour assurer le guidage du rideau gonflable (1) dans son déploiement vers le bas,
**caractérisé**
- **en ce que** le rideau gonflable (1) comprend une chambre verticale (30) susceptible d'être gonflée le long de l'organe de guidage (5) depuis la zone supérieure jusqu'à la zone inférieure du rideau gonflable (1), la chambre verticale (30) étant disposée sensiblement directement au-dessus d'une extrémité de base d'une sangle de liaison (7),
- et **en ce qu'**une ligne verticale (C) reliant des points médians selon la direction de la largeur de la chambre verticale (30) est sensiblement parallèle à l'organe de guidage (5).

2. Le dispositif formant rideau gonflable selon la revendication 1, dans lequel la sangle de liaison (7) qui fait saillie depuis la partie inférieure de la chambre verticale (30) du rideau gonflable (1) est guidée par l'organe de guidage (5).

3. Le dispositif formant rideau gonflable selon la revendication 1 ou 2, dans lequel l'organe de guidage (5) s'étend dans la zone des passagers d'un véhicule.
